**Europäisches Patentamt**

**European Patent Office**

**Office européen des brevets**

(11) Veröffentlichungsnummer: **0 291 812 B1**

# EUROPÄISCHE PATENTSCHRIFT

(12)

(45) Veröffentlichungstag der Patentschrift:
07.08.91 Patentblatt 91/32

(51) Int. Cl.⁵ : **A01D 78/10**

(21) Anmeldenummer: **88107424.9**

(22) Anmeldetag: **09.05.88**

(30) Priorität: **22.05.87 DE 3717307**

(43) Veröffentlichungstag der Anmeldung:
**23.11.88 Patentblatt 88/47**

(45) Bekanntmachung des Hinweises auf die
Patenterteilung:
**07.08.91 Patentblatt 91/32**

(84) Benannte Vertragsstaaten:
**AT BE CH FR GB IT LI NL**

(56) Entgegenhaltungen:
**EP-A- 0 224 667**
**DE-A- 2 832 425**
**DE-A- 3 038 584**
**DE-B- 1 266 556**

(54) Landmachine, insbesondere ein Kreiselzettwender.

(73) Patentinhaber: **GREENLAND GMBH & CO. KG**
**Erwin-Dietrich-Platz 1**
**W-7702 Gottmadingen (DE)**

(72) Erfinder: **Wessel, Ulrich**
**Hilzingerstrasse 33**
**W-7702 Gottmadingen (DE)**

(74) Vertreter: **Patentanwälte Grünecker,**
**Kinkeldey, Stockmair & Partner**
**Maximilianstrasse 58**
**W-8000 München 22 (DE)**

**Beschreibung**

Die Erfindung betrifft eine Landmaschine der im Oberbegriff des Patentanspruchs 1 angegebenen Art.

Bei einer aus der DE-B-1266556 bekannten Landmaschine dieser Art muß beim Umstellen der Landmaschine zwischen der Transportstellung und der Arbeitsstellung bzw. umgekehrt die Bedienungsperson im Schwenkbereich des außenliegenden verschwenkbaren Tragrohres stehen, um das Stellmittel des Sperriegels von Hand betätigen zu können. Beim Umstellen ist erhöhte Aufmerksamkeit erforderlich, um Verletzungen zu vermeiden. Das Umstellen ist umständlich, da zunächst der Sperriegel gelöst, dann das Tragrohr verschwenkt und schließlich der Sperriegel erneut wieder in die Sperrstellung gebracht werden muß. Funktionsstörungen durch Verschmutzungen sind nicht zuverlässig auszuschließen.

Der Erfindung liegt die Aufgabe zugrunde, eine Landmaschine der eingangs genannten Art zu schaffen, die konstruktiv und baulich einfach ist und sich gefahrlos zwischen der Arbeits- und der Transportstellung umstellen läßt.

Die gestellte Aufgabe wird erfindungsgemäß durch die im kennzeichnenden Teil des Patentanspruchs 1 angegebenen Merkmale gelöst.

Um den jeweiligen Sperriegel zu lösen, kann die Bedienungsperson an geeigneter Stelle am Stellmittel angreifen, ohne in den Schwenkbereich des zu verschwenkenden Tragrohres bzw. Arbeitswerkzeuges zu kommen.

Die Ausführungsform gemäß Anspruch 2 ist zweckmäßig, weil das zu verschwenkende Tragrohr bei der Schwenkbewegung geführt wird.

Bei der Ausführungsform gemäß Anspruch 3 wird eine halbautomatische Funktion erreicht, weil die durch Betätigung des gemeinsamen Stellmittels gelösten Sperriegel durch die Federbelastung selbsttätig in die Sperrstellung gelangen und das Tragrohr in der jeweiligen Stellung selbsttätig verriegeln.

Weitere, zweckmäßige Ausführungsformen gehen aus den Unteransprüchen 4 bis 9 hervor.

In der Zeichnung ist ein Ausführungsbeispiel der Erfindung dargestellt und wird im folgenden näher erläutert.

Hierbei zeigen :

Fig. 1    eine mehrkreislige Heuwerbungsmaschine in schematischer Darstellung, gesehen in Draufsicht ;
Fig. 2    eine Draufsicht auf eine Gelenkverbindung ;
Fig. 3    einen Schnitt durch die Gelenkverbindung entsprechend der Linie III-III in Fig. 2 ;
Fig. 4    einen Schnitt entsprechend der Linie IV-IV in Fig. 2.

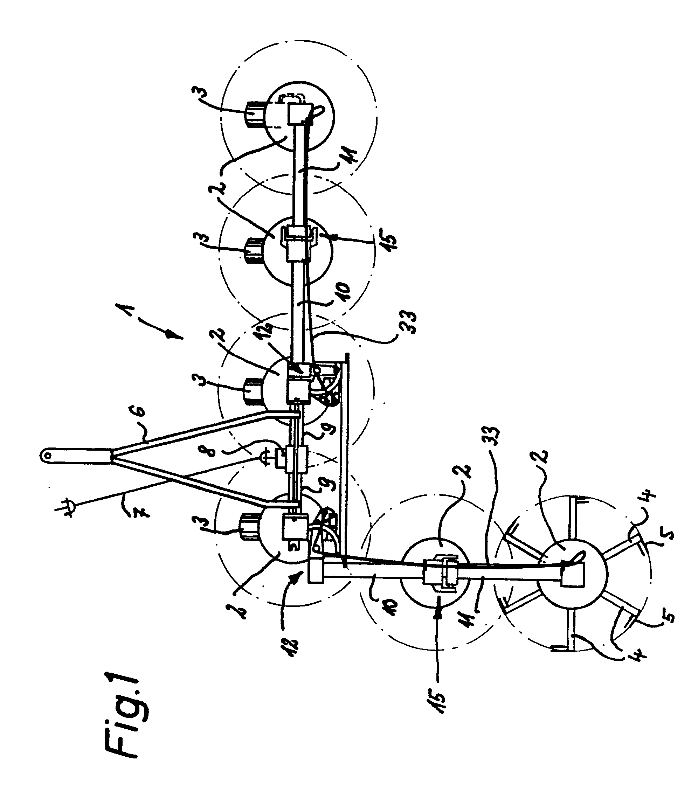

Bei der in Fig. 1 in schematischer Draufsicht dargestellten Heuwerbungsmaschine handelt es sich um einen Kreiselzettwender 1 mit insgesamt sechs Rechkörpern 2, die über Laufräder 3 auf der Bodenoberfläche abgestützt sind. Die Rechkörper 2 weisen Zinkentragarme auf, an denen Zinken 5 befestigt sind.

Der Kreiselzettwender 1 ist über eine Zugvorrichtung 6 an einen selbst nicht dargestellten Schlepper angehängt. Die Zapfwelle dieses Schleppers steht über eine Gelenkwelle 7 mit einem Eingangsgetriebe 8 in Verbindung.

Über das Eingangsgetriebe 8 erfolgt der Antrieb der Rechkörper 2 jeder Maschinenseite und zwar über jeweils eine mehrteilige Antriebswelle, die von einem inneren Tragrohr 9, einem mittleren Tragrohr 10 und einem äußeren Tragrohr 11 umgeben ist.

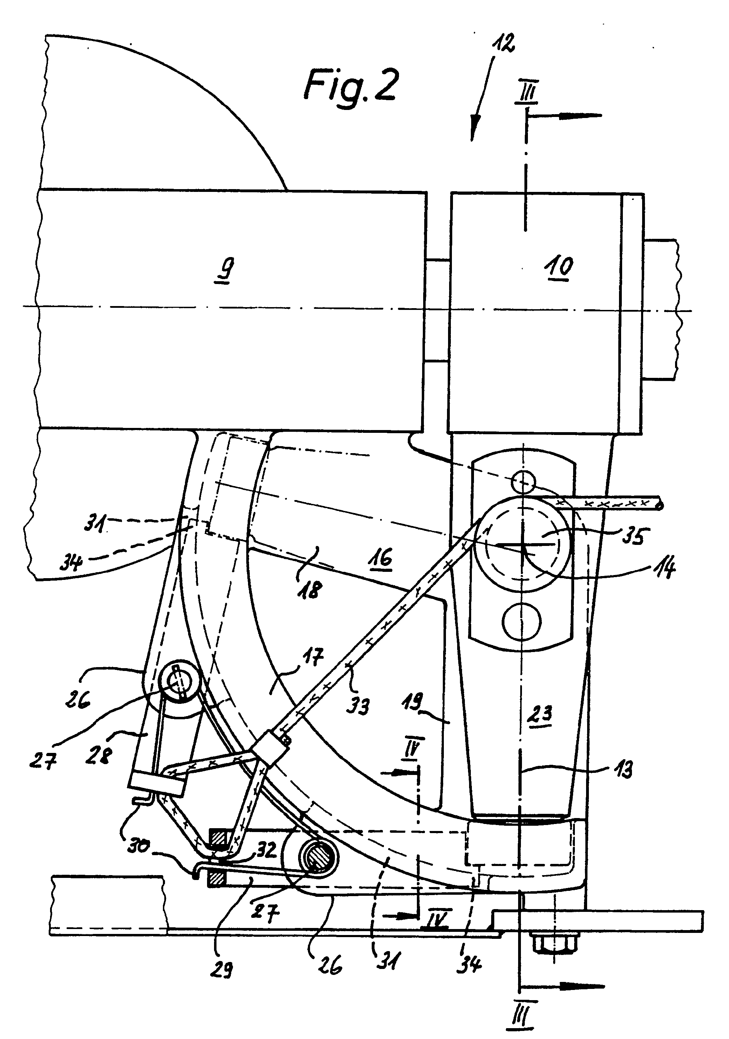

Das mittlere Tragrohr 10 ist über jeweils eine Gelenkverbindung 12 mit dem inneren Tragrohr 9 gelenkig verbunden, in der Weise, daß das Tragrohr 10 in der Vertikalebene um eine in Fahrtrichtung weisende Schwenkachse 13 (vergl. Fig. 2) schwenken kann und zusätzlich um eine vertikal gerichtete Achse 14 (vergl. ebenfalls Fig. 2) gegenüber dem inneren Tragrohr 9 um 90° nach hinten — bezogen auf die Fahrtrichtung A — in die Transportstellung eingeschwenkt werden kann. Die linke Maschinenhälfte entsprechend Fig. 1 ist in dieser Transportstellung wiedergegeben. Hierbei weist das mittlere Tragrohr 10 und das äußere Tragrohr 11 jeder Maschinenseite etwa in Fahrtrichtung, sodaß die Transportbreite wesentlich geringer ist als die Arbeitsbreite.

Die äußeren Tragrohre 11 sind über gabelförmige Gelenkverbindungen 15 an die mittleren Tragrohre 10 angeschlossen und zwar so, daß die Tragrohre 11 um in Fahrtrichtung weisende Schwenkachsen in Vertikalrichtung pendeln können, sodaß eine gute Bodenanpassung gewährleistet ist.

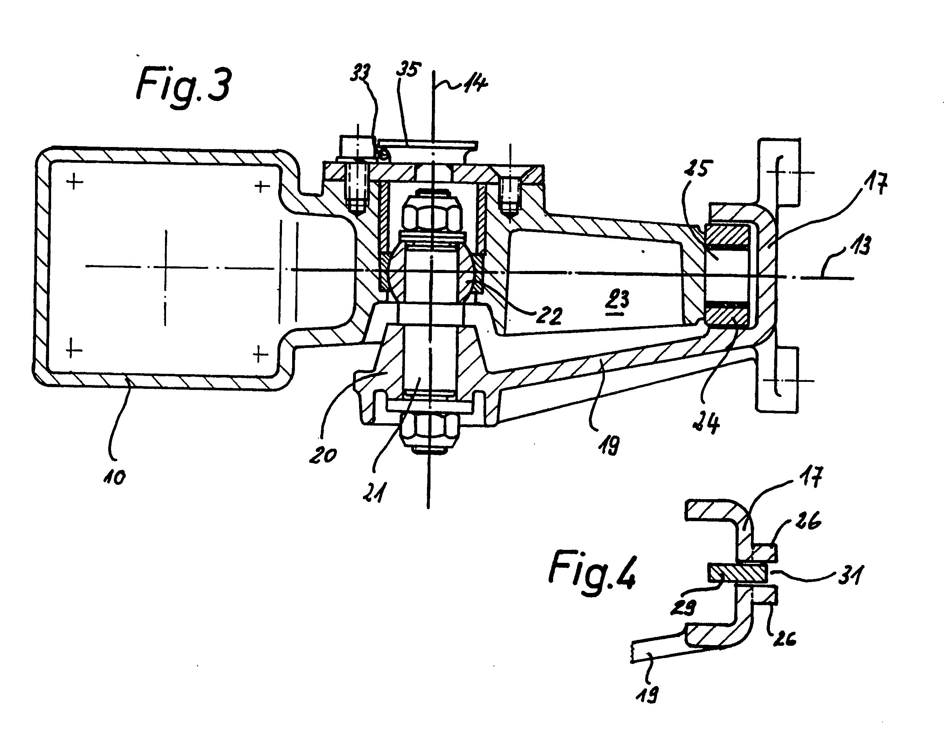

Die Fig. 2 zeigt Einzelheiten der Gelenkverbindung 12. Am in der Zeichnung rechts liegenden Ende des inneren Tragrohrs 9 ist ein Segment 16 befestigt. Dieses Segment 16 erstreckt sich — gesehen in Draufsicht — über einen Winkel von etwas mehr als 90° und wird an seinem äußeren Umfang durch einen Randbogen 17 begrenzt, der im Querschnitt (Fig. 3) U-förmig ausgebildet ist. Ferner weist das Segment 16 zwei Stege 18 und 19 auf, die miteinander und mit dem Randbogen 17 verbunden sind. Die Verbindung der Stege 18 und 19 ist als Lagerauge 20 zur Aufnahme eines vertikal stehenden Zapfens 21, wie in Fig. 3 dargestellt, ausgebildet.

Dieser Zapfen 21 ist Bestandteil einer Kugelgelenkverbindung 22, durch die die Schwenkachsen 13 und 14 bereitgestellt werden. Auf diese Weise kann das mittlere Tragrohr 10 — wie beschrieben — sowohl um die Achse 13 schwenken als auch um die Achse 14 verdreht werden.

Das innere, der Maschinenmitte zugewandte Ende des mittleren Tragrohrs 10 ist mit einem Queransatz 23 versehen. Der Queransatz 23 trägt eine Rolle 24, die auf einem Lagerbund 25 drehbar gelagert ist und in den U-förmig ausgebildeten Randbogen 17 eintaucht.

Am Randbogen 17 sind außen Lageraugen 26 angeformt. Die Lageraugen 26 nehmen zwei vertikal stehende Schwenkbolzen 27 auf, um die zwei zweiarmige Sperriegel 28 und 29 schwenkbar gelagert sind. Die Sperriegel 28 und 29 stehen unter der Wirkung einer Doppel-Haarnadelfeder 30, die beide Sperriegel 28 und 29 derart belastet, daß sie ständig bestrebt sind, durch Ausnehmungen 31 im Randbereich des Randbogens 17 nach innen in den U-förmigen Randbogen 17 und damit in den Schwenkweg der Rolle 24 einzutreten (siehe auch Fig. 4).

Die federbelasteten Enden der Sperriegel 28 und 29 sind nach oben abgewinkel und mit Ösen 32 versehen, an denen ein Stellmittel 33 z.B. in Form eines Zugseils oder eines Gestänges angelenkt ist. Die Verbindung ist hierbei so vorgenommen, daß durch Betätigen des Stellmittels 33 beide Sperriegel 28 und 29 gleichzeitig so um die Schwenkachsen 27 bewegt werden, daß die Sperriegel 28, 29 aus dem U-förmigen Randbogen 17 heraustreten. Die Länge der Sperriegel 28 und 29 ist, wie dies aus Fig. 2 hervorgeht, so bemessen, daß Sie die freien Enden die Rolle 24 hintergreifen können. Hierzu sind diese Enden zusätzlich mit einem hakenförmigen Ansatz 34 versehen.

Das Stellmittel 33 ist über eine Führungsscheibe 35 geführt, die am Queransatz 23 festgeschraubt ist.

In Fig. 2 ist das mittlere Tragrohr 10 in seiner der Betriebsstellung entsprechenden Lage eingezeichnet. Der Queransatz 23 weist — in Fahrtrichtung gesehen — nach rückwärts. Der Sperriegel 29 hintergreift mit seinem hakenförmigen Ansatz 34 die Führungsrolle 24 und sichert somit das mittlere Tragrohr 10 gegen eine Verdrehung um die vertikal stehende Achse 14. Gleichzeitig verhindert die im Randbogen 17 gesicherte Rolle 24 eine Verdrehung des mittleren Tragrohrs 10 um eine quer zur Fahrtrichtung verlaufende Achse.

Soll nun das mittlere Tragrohr 10 in seine der Transportstellung der Maschine entsprechende Stellung überführt werden, wird das Stellmittel 33 betätigt, sodaß die Sperriegel 28 und 29 gegen die Wirkung der Doppel-Haarnadelfeder 30 aus ihrer Verriegelungsposition herausgeschwenkt werden. Hierzu ist lediglich ein kurzer Betätigungsvorgang erforderlich, denn sobald das Tragrohr 10 geringfügig nach rückwärts verschwenkt ist, kann das Stellmittel 33 wieder freigegeben werden. Die Rolle 24 taucht dann seitlich am Sperriegel 29 vorbei. Im weiteren Verlauf der Schwenkbewegung gelangt die Führungsrolle 24 in Kontakt mit der Innenseite des Sperriegels 28, drückt diesen nach außen, sodaß der Sperriegel 28 am Ende der Schenkbewegung des Queransatzes 23 völlig selbsttätig hinter der Rolle 24 einrastet, sodaß die in Fig. 2 zusätzlich mit strichpunktierten Linien angedeutete — verschwenkte — Endlage, die der Transportstellung entspricht, gesichert ist. Zum Überführen der Maschine in ihre Arbeitsstellung läuft der vorstehend beschriebene Vorgang in umgekehrter Reihenfolge ab.

Das Stellmittel 33 ist über die gesamte Länge der Tragrohre 9, 10 und 11 zu beiden Seiten der Maschine nach außen in den Bereich des jeweils äußeren Rechkörpers geführt. Auf diese Weise ist es der Bedienungsperson möglich, die Sperriegel 28, 29 seitlich an der Maschine durch Fernbetätigung zu lösen. Da sich die Bedienungsperson hierzu nicht im Schwenkbereich der Tragrohre 9, 10, 11 aufhalten muß, ist eine Quelle möglicher Unfälle ausgeschlossen. Die Anwendung der vorliegenden Erfindung ist nicht auf Heuwerbungsmaschinen beschränkt ; sie kann vielmehr überall dort eingesetzt werden, wo eine Landmaschine (z.B. ein Mähwerk) um 90° in eine Transportstellung verschwenkt wird.

## Patentansprüche

1. Landmaschine, insbesondere Kreiselzettwender, mit einem Maschinenrahmen, bestehend aus einem an einen Schlepper anschließbaren Anschlußrahmen (6), einem Eingangsgetriebe (8) zum Antreiben einer mehrteiligen Antriebswelle (7), deren Teile von miteinander verbundenen Tragrohren (9, 10, 11) umgeben sind, mit an den Tragrohren (9, 10, 11) drehantreibbar gelagerten Arbeitswerkzeugen (2), wobei zumindest — bezogen auf die Maschinenmitte — außenliegende Arbeitswerkzeuge (2) mit ihren Tragrohren (10, 11) jeweils relativ zu einem innenliegenden Tragrohr (9) um annähernd vertikale Achsen (14) aus ihrer quer zur Fahrtrichtung liegenden Arbeits- entgegen der Fahrtrichtung in eine Transportstellung nach hinten verschwenkbar sind, wobei jeweils das um die Achse (14) verschwenkbare, außenliegende Tragrohr (10) in der Arbeits- und in der Transportstellung mit einem durch ein Stellmittel (33) lösbaren Sperriegel (28, 29) in einem am innenliegenden Tragrohr (9) angeordneten Segment (16) gegen Verschwenken gesichert ist, **dadurch gekennzeichnet, daß** das außenliegende Tragrohr (10) eine Rolle (24) aufweist, mit der das außenliegende Tragrohr (10) beim Verschwenken um die Achse (14) im Segment (16) geführt ist, daß am Segment (16) jeweils ein Transportstellungs-Sperriegel (28) und ein Arbeitsstellungs-Sperriegel (29) angeordnet sind, und daß an den Sperriegeln (28, 29) zu deren gemeinsamer Betätigung ein einziges, fernbetätigbares Stellmittel (33) angelenkt ist.

2. Landmaschine nach Anspruch 1, **dadurch gekennzeichnet,** daß die Rolle (24) in Segment (16) in einem mit U-förmigem Querschnitt ausgebildeten Randbogen (17) geführt ist.

3. Landmaschine nach den Ansprüchen 1 und 2, **dadurch gekennzeichnet,** daß die beiden Sperriegel (28, 29) zweiarmige Hebel sind, die am Segment (16) um Schwenkbolzen (27) unter Federbelastung durch Ausnehmungen (31) in dem Randbogen (17) einschwenkbar und durch Zug am gemeinsamen Stellmittel (33) aus dem Schwenkweg der Rolle (24) aus dem Randbogen (17) herausschwenkbar sind.

4. Landmaschine nach den Ansprüchen 1 bis 3, **dadurch gekennzeichnet,** daß jeder Sperriegel (28, 29) einen hakenförmigen Ansatz (34) für die Rolle (24) aufweist.

5. Landmaschine nach Anspruch 3, **dadurch gekennzeichnet,** daß die außerhalb des Randbogens (17) liegenden Enden der Sperriegel (28, 29) nach oben abgewinkelt und mit Ösen (32) versehen sind, an denen das gemeinsame Stellmittel (33) angelenkt ist und die Federbelastung angreift.

6. Landmaschine nach Anspruch 5, **dadurch gekennzeichnet,** daß die beiden Sperriegel (28, 29) durch eine Doppel-Haarnadelfeder (30) federbelastet sind.

7. Landmaschine nach Anspruch 1, **dadurch gekennzeichnet,** daß das Stellmittel (33) ein Zugseil ist, das über mindestens eine am außenliegenden Tragrohr (10) angeordnete Führungsscheibe (35) geführt ist.

8. Landmaschine nach Anspruch 1, **dadurch gekennzeichnet,** daß das Stellmittel (33) ein Gestänge ist.

9. Landmaschine nach Anspruch 1, **dadurch gekennzeichnet,** daß das Stellmittel (33) über die gesamte Länge der Tragrohre (9, 10, 11) zu beiden Seiten der Maschine nach außen bis in den Bereich der in der Arbeitsstellung jeweils äußeren Arbeitswerkzeuge (2) geführt ist.

## Claims

1. An agricultural implement, particularly a rotary tedder, with a machine frame consisting of a connector frame (6) connectable to a tractor, of an input gear system (8) for propelling a multi-part drive shaft (7) whose parts are surrounded by carrier tubes (9, 10, 11) connected together, with working tools (2) mounted to be rotarily driven on said carrier tubes (9, 10, 11), at least those working tools (2) lying outermost with respect to the machine's centre each being swingable along with their carrier tubes (10, 11) relative to an inwardly-lying carrier tube (9) around approximately vertical axes (14) out of their working position lying transversely to the direction of travel, opposite to the direction of travel, backward into a transport position, the respective carrier tube (10), lying outermost and pivotal around the axis (14) being secured against pivoting in the working and in the transport positions by means of a locking bar (28, 29) releasable by a setting means (33) and located in a segment (16) disposed on the inwardly-lying carrier tube (9), characterised in that the outwardly-lying carrier tube (10) has a roller (24), by means of which the outwardly-lying carrier tube (10), when pivoting around the axis (14), is guided in the segment (16), that a transport position locking bar (28) and a working position locking bar (29) are disposed respectively on the segment (16), and that a single, remotely-controlled setting means (33) is articulated to the locking bars (28, 29) for their common activation.

2. An agricultural implement according to Claim 1, **characterised in that** the roller (24) is guided in the segment (16) in a curved edge-portion (17) thereof having a U-shaped cross-section.

3. An agricultural implement according to Claims 1 and 2, **characterised in that** both locking bars (28, 29) are double-armed levers, which are pivotable under spring load on the segment (16) around swivel pins (27), trough recesses (31) into the curved edge-portion (17), and which are pivotable by means of traction on a common setting means (33) out of the pivotal path of the roller (24), out of the curved edge-portion (17).

4. An agricultural implement according to Claims 1 to 3, characterised in that each locking bar (28, 29) has a hook-shaped stop (34) for the roller (24).

5. An agricultural implement according to Claim 3, characterised in that the ends of the locking bars (28, 29) lying outwith the curved portion (17) are angled upwards and are provided with eyes (32) upon which the common setting means (33) are articulated, and the spring loading engages.

6. An agricultural implement according to Claim 5, characterised in that both locking bars (28, 29) are spring-loaded by a double hairpin spring (30).

7. An agricultural implement according to Claim 1, characterised in that the setting means (33) is a traction cable which is guided across at least one guide disc (35) disposed on the outwardly-lying carrier tube (10).

8. An agricultural implement according to Claim 1, characterised in that the setting means (33) is a rod linkage.

9. An agricultural implement according to Claim 1, characterised in that the setting means (33) is guided over the entire length of the carrier tubes (9, 10, 11) on both sides of the machine outwards to the vicinity of the working tools (2) which lie outermost in each case in the working position.

## Revendications

1. Machine agricole, en particulier épandeuse-faneuse avec un châssis de machine, se composant d'un bâti de raccordement (6) attelable à un tracteur, d'un engrenage d'entrée (8) pour l'entraînement d'un arbre menant (7) en plusieurs parties, dont les parties sont entourées par des tubes porteurs (9, 10, 11) reliés entre eux, avec des outils de travail (2) montés sur les tubes supports (9, 10, 11) de façon à pouvoir être entraînés en rotation, au moins des outils de travail (2) situés extérieurement — par rapport au milieu de la machine — avec leurs tubes porteurs (10, 11) étant respectivement déplaçables par pivotement relativement à un tube porteur (9) situé intérieurement, autour d'axes (14) approximativement verticaux, de leur position de travail située transversalement à la direction de locomotion en sens contraire du sens de locomotion dans une position de transport vers l'arrière, respectivement le tube porteur (10), situé extérieurement et déplaçable par pivotement autour de l'axe (14), étant immobilisable en pivotement dans la position de travail et dans la position de transport par un verrou de blocage (28, 29), déblocable par un moyen positionneur (33), dans un segment (16) disposé sur le tube porteur (9) situé intérieurement, caractérisée en ce que le tube porteur (10) situé extérieurement comporte un galet (24) par lequel le tube porteur (10) situé extérieurement est guidé dans le segment (16) lors du pivotement autour de l'axe (14), en ce que sur le segment (16) sont respectivement montés un verrou de blocage de position de transport (28) et un verrou de blocage de position de travail (29) et en ce qu'aux verrous de blocage (28, 29) est articulé, pour leur commande commune, un moyen positionneur unique (33) actionnable à distance.

2. Machine agricole selon la revendication 1, caractérisée en ce que le galet (24) dans le segment (16) est guidé dans un arc de bordure (17) réalisé avec une section transversale en forme de U.

3. Machine agricole selon les revendications 1 et 2, caractérisée en ce que les deux verrous de blocage (28, 29) sont des leviers à deux bras déplaçables par pivotement vers l'intérieur sous charge de ressort autour d'axes de pivot (27) à travers des évidements (31) dans l'arc marginal (17) et sont, par traction sur le moyen positionneur commun (33), déplaçables par pivotement vers l'extérieur hors de l'arc de bordure (17) hors du trajet de pivotement du galet (24).

4. Machine agricole selon les revendications 1 à 3, caractérisée en ce que chaque verrou de blocage (28, 29) comporte un appendice en forme de crochet (34) pour le galet (24).

5. Machine agricole selon la revendication 3, caractérisée en ce que les extrémités des verrous de blocage (28, 29), situées extérieurement à l'arc de bordure (17), sont coudées vers l'extérieur et pourvues d'oeillets (32) auxquels est articulé le moyen positionneur commun (33) et sur lequel agit la charge de ressort.

6. Machine agricole selon la revendication 5, caractérisée en ce que les deux verrous de blocage (28, 29) sont chargés par ressort par un ressort en double épingle à cheveux (30).

7. Machine agricole selon la revendication 1, caractérisée en ce que le moyen positionneur (33) est une corde de traction qui passe sur au moins une poulie de guidage (35) disposée sur le tube porteur (10) situé extérieurement.

8. Machine agricole selon la revendication 1, **caractérisée** en ce que le moyen positionneur (33) est une tringlerie.

9. Machine agricole selon la revendication 1, caractérisée en ce que le moyen positionneur (33) s'étend sur toute la longueur des tubes supports (9, 10, 11) des deux côtés de la machine vers l'extérieur jusque dans la zone des outils de travail (2) respectivement externes dans la position de travail.

Fig.1

EP 0 291 812 B1

Fig.2

Fig.3

Fig.4